# EUROPÄISCHE PATENTSCHRIFT

(11) **EP 1 361 037 B1**
(45) Veröffentlichungstag und Bekanntmachung des Hinweises auf die Patenterteilung: **06.05.2004**
(21) Anmeldenummer: 03010088.7
(22) Anmeldetag: 03.05.2003
(51) Int. Cl.: B29C 51/08, B29C 51/04, B29C 51/10, B29C 51/18, B29C 51/26

(54) **Formwerkzeug zum Tiefziehen von Behältern aus thermoplastischem Kunststoff, mit nur im Gehäuse geführter Druckluft**
Apparatus for thermoforming of thermoplastic containers, with pressuried air supply guided only through the housing
Appareil pour thermoformage des récipients thermoplastiques, avec l'air comprimé guidé seulement dans le boîtier

(30) Priorität: 10.05.2002 DE 10220703
(43) Veröffentlichungstag der Anmeldung: 12.11.2003
(73) Patentinhaber: Adolf Illig Maschinenbau GmbH & Co. KG, 74081 Heilbronn (DE)
(72) Erfinder: Eichbauer, Volker, 74223 Flein (DE); Kratochwil, Klaus, 74078 Heilbronn-Biberach (DE)

(56) Entgegenhaltungen:
- EP-A- 1 044 786
- DE-A- 4 410 313
- FR-A- 2 722 135

## Beschreibung

Die Erfindung geht aus von einem Formwerkzeug nach dem Oberbegriff des Anspruches 1. Mit diesem werden aus einer erwärmten Folienbahn aus thermoplastischem Kunststoff mittels Druckluft Behälter tiefgezogen und ggf. ausgestanzt.

Aus der DE 199 56 506 A1 und der EP 0 457 664 A1 sind derartige Formwerkzeuge bekannt, bei denen jeder Vorstrecker als Kolben ausgebildet bzw. mit einem Kolben verbunden ist, der im Niederhalter gleitend und dichtend geführt ist. Die Druckluft zur Formung der Behälter wird durch die Stange des Streckhelfers zugeführt. Der Grund dieser Ausbildung liegt darin, dass Druckluft zum Formen der Behälter eingespart werden soll, indem der Innenraum des Niederhalters hinter dem Streckhelfer beim Zuleiten der Druckluft nicht mit dieser gefüllt werden muss, sondern einen niedrigeren Druck aufweisen kann. Zudem soll die Taktzahl durch diese Maßnahme positiv beeinflusst werden. Die Druckluft zum Formen der Behälter wird über ein nicht dargestelltes Formluftventil zu- und abgeführt.
In der DE 199 56 506 A1 ist auf die Zufuhr der Formluft nicht näher eingegangen. In der EP 0 457 664 ist ein Rohr oder ein Schlauch erkennbar, der zu jeder Stange eines Streckhelfers geführt wird. Auf die Zufuhr von einem einzelnen Formluftventil aus und über die Verteilung auf einzelne Leitungen, wenn mehrere Formnester pro Reihe und mehrere Reihen von Formnestem pro Formwerkzeug angefahren werden müssen, ist nicht eingegangen. Es ist davon auszugehen, dass dann eine Vielzahl von Leitungen erforderlich ist. Da die Streckhelfer hohen Taktzahlen bis 40 Takte/Minute ausgesetzt sind besteht die Gefahr einer raschen Beschädigung solcher Schlauchleitungen. Der Platzbedarf im Bereich des Oberwerkzeuges ist recht hoch, ebenso der Montageaufwand bei jedem Werkzeugwechsel in der Thermoformmaschine, die mittels dieser austauschbaren Formwerkzeuge Behälter unterschiedlicher Gestalt herstellen kann.

Aus der DE 31 05 415 C 1 und von Werkzeugen des Anmelders ist es bekannt, die Formluft zu den einzelnen Formnestem über eine Bohrung in der Kopfplatte des Oberteils des Formwerkzeuges zuzuführen, von der aus Bohrungen zu den einzelnen Formnestem geführt werden. In der Praxis erfolgt die Formluftzufuhr zu der Bohrung in der Kopfplatte von einem Formluftventil aus, das mit der Oberbrücke der Thermoformmaschine verbunden ist, über eine Bohrung in der Oberbrücke. Beide Bohrungen werden beim Einbau des Formwerkzeuges zur Deckung gebracht. Eine Dichtung ist vorgesehen. Auch die Verwendung von zwei Formluftventilen, zwei Bohrungen in der Oberbrücke und zwei Bohrungen in der Kopfplatte ist zur Beschleunigung des Druckaufbaues bei großen Formwerkzeugen bekannt. Beim Tausch von Formwerkzeugen ist bezüglich Formluftzuführung kein Montageaufwand erforderlich, da die Bohrungen automatisch zur Deckung gelangen.
Nachteilig bei diesen Formwerkzeugen ist es, dass bei dieser Zufuhr der Formluft keine Zufuhr zu den Stangen der Streckhelfer möglich ist, da diese relativ zur Kopfplatte verschoben werden müssen.

Der Erfindung liegt die Aufgabe zugrunde, bei Vorgabe der Formluftzuführung über eine Axialbohrung in jeder Stange, die zum Verschieben des Streckhelfers dient, ohne störungsanfällige, Einbauraum und Montageaufwand erfordernde Schlauchleitungen auszukommen. Das Formwerkzeug sollte so ausgebildet sein, dass es in vorhandene Thermoformmaschinen mit vorhandener Formluftzuführung über eine Bohrung oder mehrere Bohrungen in der Oberbrücke eingebaut werden kann und von dort aus die Formluftzufuhr zu den Axialbohrungen in den Stangen erfolgt.

Gelöst ist diese Aufgabe erfindungsgemäß durch die im Kennzeichen des Hauptanspruchs angegebenen Maßnahmen.

Weitere bevorzugte Ausgestaltungen der Erfindung ergeben sich aus den übrigen, in den Unteransprüchen genannten Merkmalen.

Das Formwerkzeug ist anhand der schematischen Zeichnungen näher beschrieben. Es zeigt:
- Figur 1: einen Längsschnitt durch einen Teil einer Reihe von Formnestem des Formwerkzeuges in geschlossener Stellung vor Einleitung des Tiefziehvorganges.
- Figur 2: denselben Längsschnitt nach mechanischer Vorstreckung der Behälter durch die Streckhelfer und nach vollendetem Tiefziehvorgang.

Das Formwerkzeug besteht aus dem Oberteil 1 und dem Unterteil 2. Letzteres umfasst eine Grundplatte 3, einen Kühlblock 4 und in diesen pro Formnest eingesetzte Formeinsätze 5 einreihig oder mehrreihig mit der Gestalt der herzustellenden Behälter 6. Die Formeinsätze 5 sind einteilig oder zweiteilig ausgebildet und tragen bei kombiniert formenden und stanzenden Formwerkzeugen an der oberen, der Folienbahn 7 zugewandtem Seite, eine Schnittkante 8. Eine Kühlung der Formeinsätze 5 erfolgt über die Kammer 9 zwischen Kühlblock 4 und Außenform der Formeinsätze 5 in bekannter Weise. Zum Ausschieben der Behälter 6 aus den Formeinsätzen 5 dient ein verschiebbarer Formboden 10.

Das Oberteil 1 setzt sich zusammen aus einer Kopfplatte 11, einer Zwischenplatte 12, der Matrize 13 und einem in jedem Formnest angeordneten Niederhalter 14. Jeder Niederhalter 14 ist federnd nachgiebig gehalten und schiebt nach dem Ausstanzen der Behälter 6 und nach dem Öffnen des Formwerkzeuges diese aus der Matrizenbohrung. Im Niederhalter 14 ist ein Streckhelfer 15 verschiebbar angeordnet in der Weise, dass zumindest im unteren, der Folienbahn 7 zugewandten Bereich, eine Abdichtung zwischen Streckhelfer 15 und Niederhalterbohrung 18 über eine Dichtung 25 gegeben ist. Abluftbohrungen 19, 20, 21 sind so angeordnet, dass der Innenraum des Niederhalters 14 ins Freie entlüftet werden kann.

Die Streckhelfer 15 sind jeweils über eine Stange 16 mit einer gemeinsamen Halteplatte 17 verbunden. Diese kann über eine als Pfeil 35 dargestellte Antriebseinrichtung verschoben werden. Jede Stange 16 hat im Innern eine Axialbohrung 22 zum Zuleiten der Formluft zu Austrittsöffnungen 23, 24 im Streckhelfer 15. Zu den Axialbohrungen 22 wird die Formluft über die Kopfplatte 11 zugeführt, in der eine Bohrung 26 verläuft, die mit einem nicht dargestellten Formluftventil in Verbindung steht. Diese Bohrung 26 führt bis zu einer Querbohrung 27 und von dort aus über eine Vertikalbohrung 28 bis in den unteren Bereich der Zwischenplatte 12. In Zwischenplatte 12 und Kopfplatte 11 - bzw. bei einer baulich dicken Kopflatte 11 nur in dieser - verläuft eine zur Vertikalbohrung 28 parallele Vertikalbohrung 29, die in der Kopfplatte 11 durch eine Buchse 30 abgeschlossen ist. Eine Verbindungsbohrung 31 verbindet die Vertikalbohrungen 28, 29. In der Buchse 30 geführt und abgedichtet über die Dichtung 38 verläuft ein Rohr 32, das an der Halteplatte 17 befestigt ist. Die Bohrung 33 des Rohres 32 steht in Verbindung mit einer Längsbohrung 34 in der Halteplatte 17 und trifft auf die Axialbohrung 22 in jeder Stange 16. Auf diese Weise ist eine Verbindung vom Formluftventil über die Kopfplatte 11 bis zu den Axialbohrungen 22 hergestellt.

Verfahrensmäßig findet folgender Ablauf statt:

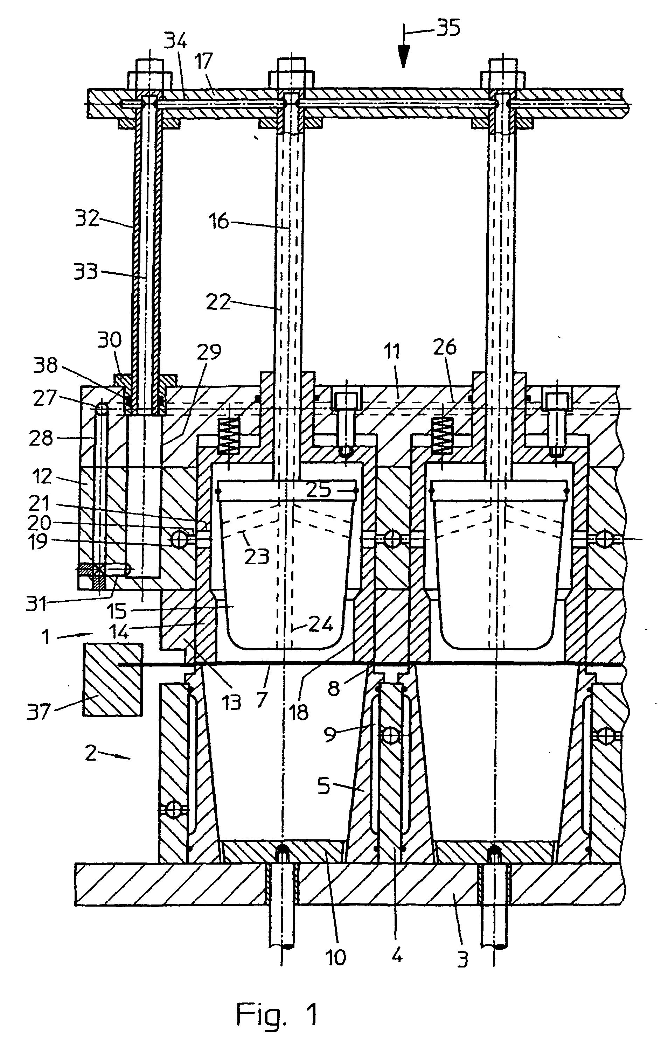

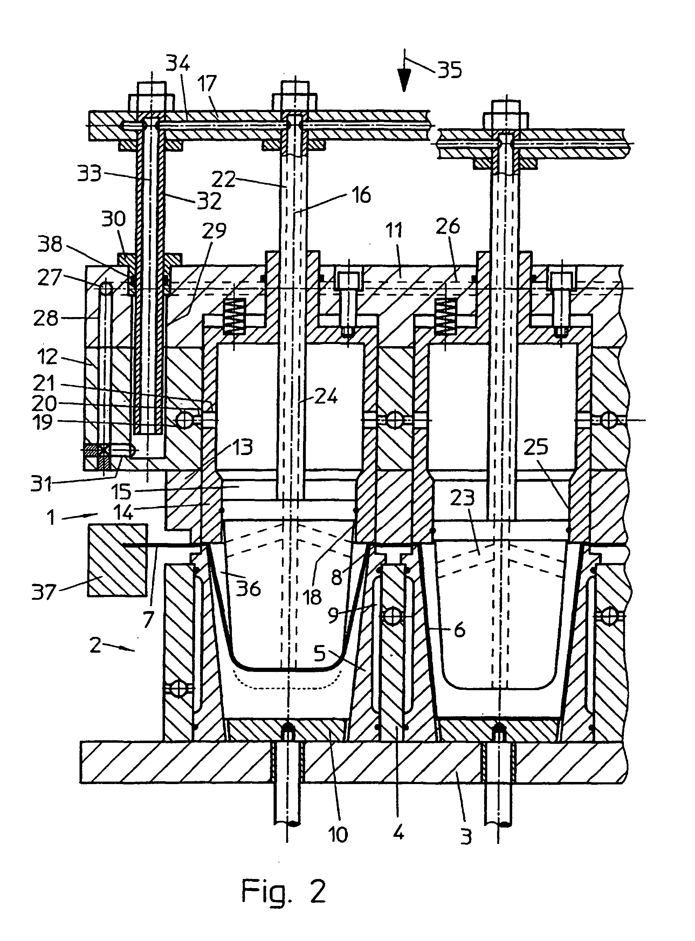

Nach dem Eintransport eines Abschnittes der erwärmten Folienbahn 7 zwischen die geöffneten Werkzeughälften 1, 2 mittels einer intermittierend betriebenen Transporteinrichtung 37 wird dieses geschlossen. ( Lage in Fig. 1 dargestellt ).Die Streckhelfer 15 werden über die als Pfeil 35 dargestellte Antriebseinrichtung nach unten bewegt bis in die Figur 2 dargestellte Lage, in der eine Abdichtung zwischen Streckhelfer 15 und Bohrung 18 gegeben ist. Zwischen dieser Stellung und der untersten - in Figur 2 im rechten Formnest dargestellten Lage - wird die Formluft zugeführt. Der optimale Zeitpunkt zur Erzielung einer gleichmäßigen Wandstärkenverteilung der Behälter 6 ist abhängig von vielen Faktoren, wie Behältergestalt, Folienart, Foliendicke, und wird durch Versuche ermittelt. Die Zufuhr der Druckluft erfolgt über die Bohrung 26 bis zu den Axialbohrungen 22 und strömt dann über die Austrittsöffnungen 23, 24 in den Innenraum 36 und formt die Behälter 6, während die Abwärtsbewegung des Streckhelfers 15 bis in unterste Lage erfolgt.

Während der Aufwärtsbewegung des Streckhelfers 15 bis in Ausgangslage strömt die Formluft, wenn die Dichtung 25 die Bohrung 18 verlässt und in den erweiterten Bereich eintritt, über die Bohrungen 19, 20, 21 ins Freie. Nach dem Auskühlen der Behälter 6 werden diese bei kombiniert formenden und stanzenden Formwerkzeugen ausgestanzt und bei wieder geöffnetem Formwerkzeug ausgeworfen. Bei einem reinen Formwerkzeug bleiben sie mit der Folienbahn 7 verbunden und werden Nachfolgeeinrichtungen zugeführt.

## Patentansprüche

1. Formwerkzeug zum Tiefziehen von Behältem (6) aus einer erwärmten Folienbahn (7) aus thermoplastischem Kunststoff, bestehend aus Oberteil (1) und Unterteil (2), wobei das Unterteil (2) die Formeinsätze (5) trägt und das Oberteil (1) pro Formnest einen Niederhalter (14) und einen darin angeordneten, über eine Stange (16) verschiebbaren Streckhelfer (15) mit einer Axialbohrung (22) zum Zuleiten der Formluft zu Austrittsöffnungen (23, 24) im Streckhelfer (15), **dadurch gekennzeichnet, dass** die Formluft von einer Bohrung (26) in der Kopfplatte (11) aus über Bohrungen (27, 28, 31) zu einer Vertikalbohrung (29) in Zwischenplatte (12) und/oder Kopfplatte (11) geleitet wird, in der ein an der Trägerplatte (17) befestigtes Rohr (32) dichtend geführt ist, wobei die Bohrung (33) des Rohres (32) mit einer in der Halteplatte (17) vorgesehenen Längsbohrung (34) in Verbindung steht, die zu den Axialbohrungen (22) der Stangen (16) führt.

2. Formwerkzeug nach Anspruch 1, **dadurch gekennzeichnet, dass** der Abschluss der Vertikalbohrung (29) durch eine Buchse (30) gebildet wird, die eine Dichtung (38) zum Abdichten der Stange (16) trägt und zur Führung der Stangen (16) bei deren Axialbewegung dient.

## Claims

1. Mould tool for deep-drawing containers (6) from a heated film strip (7) of thermoplastic plastics material, consisting of an upper part (1) and a lower part (2), wherein the lower part (2) carries the mould inserts (5) and the upper part (1) carries for each mould nest a holding-down device (14) and a stretching aid (15), which is arranged therein and displaceable by way of a rod (16), with an axial bore (22) for the feed of moulding air to outlet openings (23, 24) in the stretching aid (15), **characterised in that** the moulding air is conducted from a bore (26) in the head plate (11) out by way of bores (27, 28, 31) to a vertical bore (29) in intermediate plate (12) and/or head plate (11), in which a pipe (32) fastened to the support plate (17) is sealingly guided, wherein the bore (33) of the pipe (32) is connected with a longitudinal bore (34), which is provided in the support plate (17) and leads to the axial bores (22) of the rods (16).

2. Mould tool according to claim 1, **characterised in that** the closure of the vertical bore (29) is formed by a bush (30), which carries a seal (38) for sealing the rod (16) and serves for guidance of the rods (16) during axial movement thereof.

## Revendications

1. Outil de formage pour l'emboutissage de récipients (8) à partir d'une bande en feuille (7) chauffée en matière synthétique thermoplastique, formé d'une partie supérieure (1) et d'une partie inférieure (2), la partie inférieure (2) portant les inserts de moule (5) et la partie supérieure (1) portant pour chaque cavité de formage un serre-flan (14) et un auxiliaire d'étirage (15), placé à l'intérieur de celui-ci, qui peut être déplacé au moyen d'une tige (16) et qui comporte un perçage axial (22) destiné à acheminer l'air de formage vers des orifices de sortie (23, 24) situés dans l'auxiliaire d'étirage (15),
**caractérisé en ce que**
l'air de formage est acheminé depuis un perçage (26) situé dans la plaque de tête (11) par l'intermédiaire de perçage (27, 28, 31) jusqu'à un perçage vertical (29) situé dans la plaque intermédiaire (12) et/ou la plaque de tête (11) dans laquelle est guidé de façon étanche un tube (32) fixé à la plaque de support (17), le perçage (33) du tube (32) étant en liaison avec un perçage longitudinal (34) qu'on prévoit dans la plaque de maintien (17) et qui mène aux perçages axiaux (22) des tiges (16).

2. Outil de formage selon la revendication 1,
**caractérisé en ce que**
la fermeture du perçage vertical (29) est formé par une douille (30) qui porte un joint (38) destiné à rendre la tige (16) étanche et qui sert à guider les tiges (16) lors de leur déplacement axial.
